# EUROPEAN PATENT APPLICATION

(11) **EP 1 640 848 A1**
(43) Date of publication of application: **29.03.2006**
(21) Application number: 04022361.2
(22) Date of filing: 20.09.2004
(51) Int. Cl.: G06F 1/16, G06F 1/18

(54) **Tablet PC with interchangeable housing type**

(71) Applicant: VAC Corporation, Taipei (TW)
(72) Inventor: Chang, Yu-Juei, Tapei, Taiwan (TW)
(74) Representative: Kühn, Armin

(57) **Abstract**

A tablet PC with an interchangeable housing has a frame having a screen arranged thereon, and a housing disposed outside the frame and having an opening relating to the screen. The housing and the frame are individually formed, and the housing can be replaced easily without further processing to meet needs for various types with a low cost.

## Description

### BACKGROUND OF THE INVENTION

### 1. Field of the Invention

The present invention relates to a tablet PC, and particularly relates to a tablet PC with an interchangeable housing type.

### 2. Background of the Invention

As technology develops, more and more electronic products are provided for different choices. A conventional tablet PC, like a conventional notebook, is light and small in size, thus providing portability for those who need it, such as students and businessmen. The conventional tablet PC has multiple applications, and can function as a notebook, surf the Internet and receive e-mail. The conventional tablet PC also provides a classic design for various tastes.

The conventional tablet PC includes a touch-sensitive screen, a circuit board, a plurality of electronic devices arranged therein (like a disk drive or a card reader), and a housing. The casing includes an upper casing, a lower casing mating with the upper casing, and a cavity formed between the upper casing and the lower casing. The touch-sensitive screen, the circuit board and the electronic devices are received in the cavity and secured to the upper casing or the lower casing.

The housing of the conventional tablet PC cannot be replaced freely because the touch-sensitive screen, the circuit board and the electronic devices are secured to the upper casing or the lower casing. For a manufacturing process, the touch-sensitive screen, the circuit board and the electronic devices must be processed under a specific line that provides a single type; thus, different kinds of conventional tablet PC involve different production lines, and stocks of all types of the conventional tablet PC should be provided to meet various requirements. This raises costs.

### SUMMARY OF INVENTION

The primary object of the invention is therefore to specify a tablet PC with an interchangeable housing type, such that various types of housing can be assembled therewith to meet requirements in a low-cost manner.

According to the invention, the object is achieved by a tablet PC with an interchangeable housing type including a frame including a screen arranged thereon, and a housing disposed outside the frame and including an opening relating to the screen. The housing and the frame are individual elements, and the type of housing can be easily changed without further processing at a low cost.

To provide a further understanding of the invention, the following detailed description illustrates embodiments and examples of the invention. Examples of the more important features of the invention thus have been summarized rather broadly in order that the detailed description thereof that follows may be better understood, and in order that the contributions to the art may be appreciated. There are, of course, additional features of the invention that will be described hereinafter and which will form the subject of the claims appended hereto.

### BRIEF DESCRIPTION OF THE DRAWINGS

These and other features, aspects, and advantages of the present invention will become better understood with regard to the following description, appended claims, and accompanying drawings, where:
Fig. 1 is an exploded view according to a tablet PC of the present invention;
Fig. 2 is an exploded view from another angle according to the tablet PC of the present invention;
Fig. 3 is an exploded view of an upper casing and a lower casing according to the present invention;
Fig. 4 is a perspective view according to the tablet PC of the present invention; and
Fig. 5 is a perspective view from another angle according to the tablet PC of the present invention.

### DETAILED DESCRIPTION OF THE EMBODIMENTS

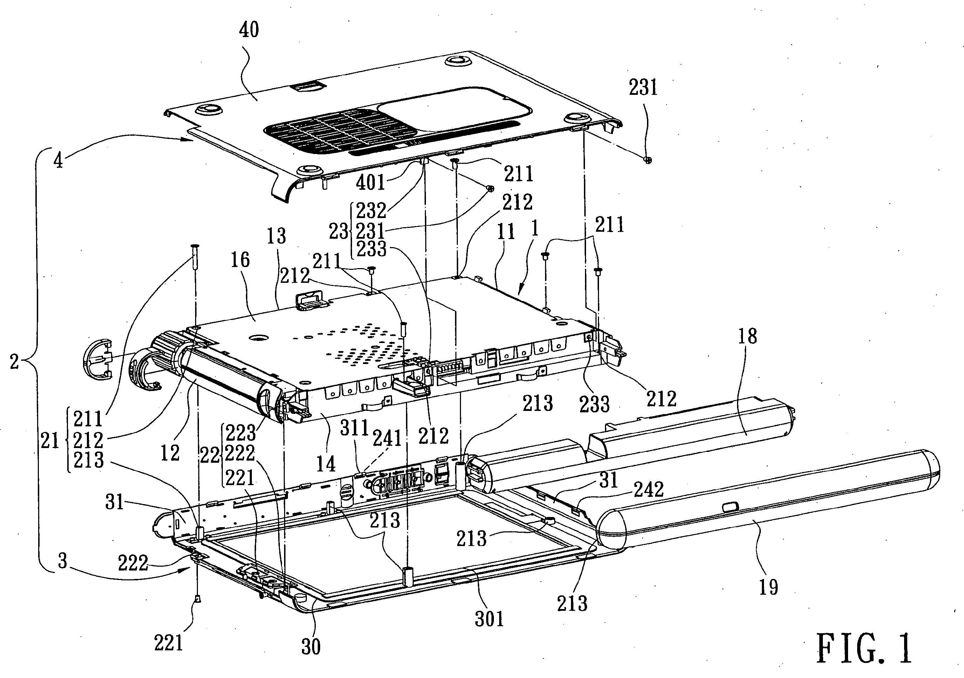

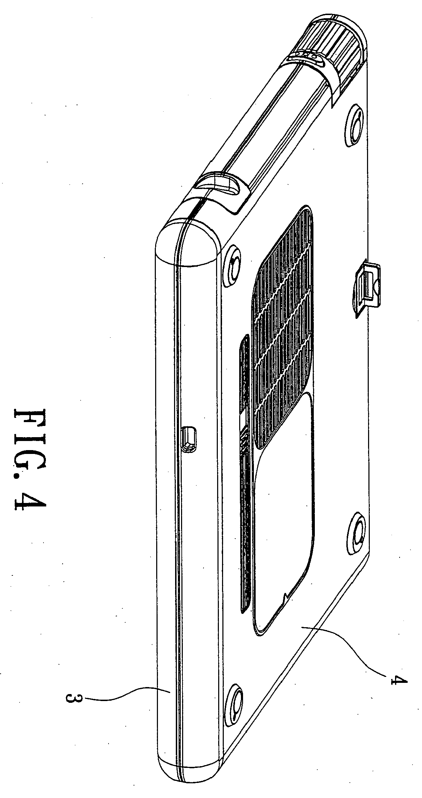

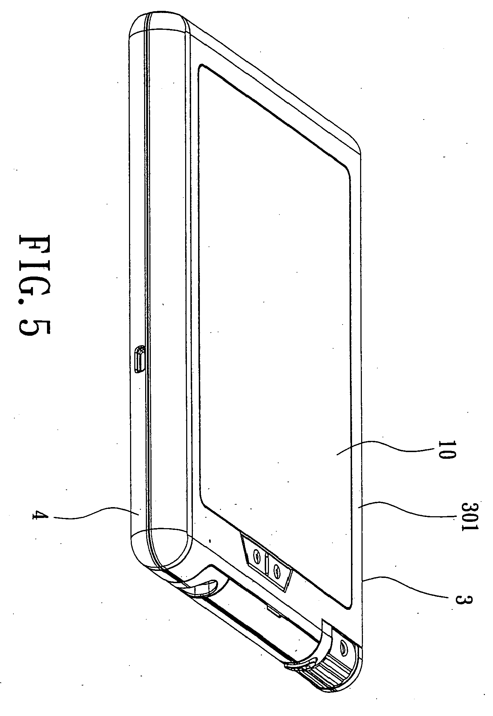

Referring to Figs. 1 to 5, the present invention provides a tablet PC with an interchangeable housing type that includes a frame 1 and a housing 2. The frame 1 includes a screen 10, a circuit board (not shown), and a plurality of electronic devices (not shown) arranged thereon. The electronic devices include disc drivers or card readers. In this embodiment, the frame 1 is approximately rectangular in shape. The frame 1 includes a first side edge 11, a second side edge 12, a top edge 13 and a bottom edge 14. The first edge 11 of the frame 1 can be used with a touch pen 17, and a battery 18 is installed in the bottom edge 14 of the frame.

The housing 2 is disposed outside the frame 1 and includes an upper casing 3 and a lower casing 4, in this embodiment. The upper casing 3 includes an upper portion 30 and a first exterior perimeter wall 31 extending integrally in one piece from the upper portion 30. The upper portion 30 has an inner surface arranged on a top 15 of the frame 1. The upper portion 30 has an opening 301 formed thereon and relating to the screen 10. The lower casing 4 includes a lower portion 40 and a second exterior perimeter wall 41 extending integrally in one piece from the lower portion 40. The lower portion 40 has an inner surface arranged on a bottom 16 of the frame 1.

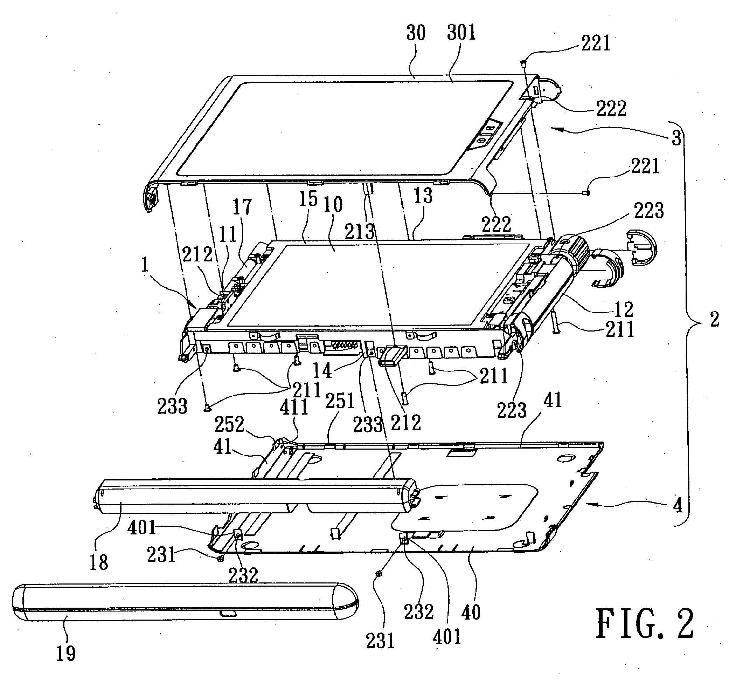

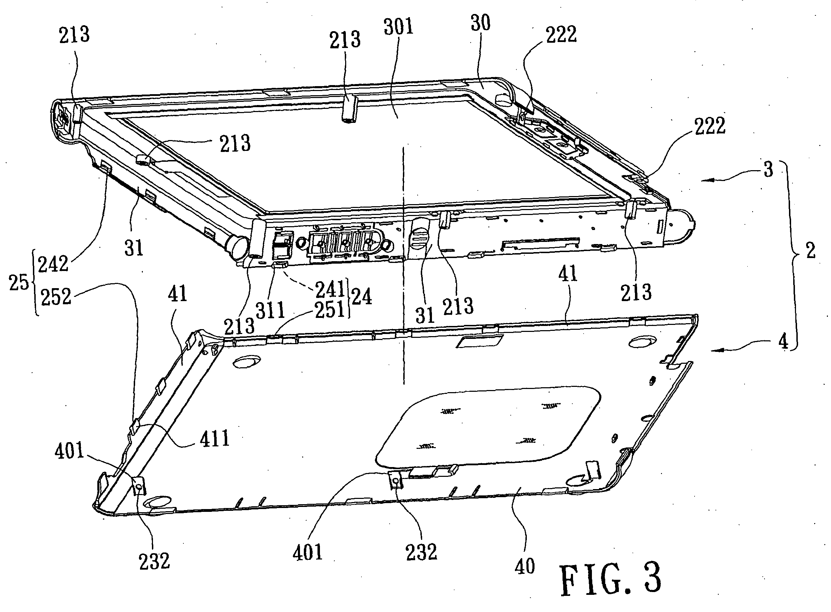

With respect to Figs. 1 and 2, the tablet PC includes a first connection structure 21, a second connection structure 22 and a third connection structure 23. The first connection structure 21 and the second connection structure 22 are disposed on the frame 1 and upper casing 3. The first connection structure 21 and the second connection structure 22 connect the upper casing 3 to the top 15 of the frame 1. The third connection structure 23 is disposed on the frame 1 and the lower casing 4. The third connection structure 23 connects the lower casing 4 to the bottom 16 of the frame 1. Illustrated in Fig. 3, the housing 2 includes a first clamping mechanism 24 and a second clamping mechanism 25 disposed on both the upper casing 3 and the lower casing 4. The housing 2 has a cavity formed between the upper casing 3 and the lower casing 4 for receiving the frame 21 (see Figs. 1 and 2).

According to this embodiment, the first connection structure 21, the second connection structure 22, the third connection structure 23, the first clamping mechanism 24 and the second clamping mechanism 25 will be further described below.

Referring to Figs. 1 to 3, the frame 1 includes a first through hole 212, a second mounting member 223 and a third mounting member 233. The first through hole 212 is formed in a periphery of the frame 1 and penetrates from the top 15 to the bottom 16 of the frame 1. The second mounting member 223 is disposed on the second side edge 12 of the frame 1. The third mounting member 223 is located on the bottom edge 14 of the frame 1. The first mounting member 213 is disposed on an inner surface of the upper portion 30 of the upper casing 3 and relates to the first through hole 212 of the frame 1. The second through hole 222 is formed on the upper casing 3 and relates to the second mounting member 223 of the frame 1. The first exterior perimeter wall 31 of the upper casing 3 includes a first clamping member 311 relating to the top side edge 13 of the frame 1; the first clamping member 311 has a first recess 241 formed on an outer surface thereof, and the first exterior perimeter wall 31 has a second recess 242 formed in an inner surface thereof to relate to the first side edge 11 of the frame 1. The lower portion 40 of lower casing 4 has an inner tab 401 disposed on an inner surface thereof. The inner tab 401 has a third through hole 232 formed therein and relating to the third mounting member 223 of the frame 1. The second exterior perimeter wall 41 of the lower casing 4 has a first clamping bump 251 relating to the first recess 241 of the upper casing 3. The second exterior perimeter wall 41 of the lower casing 4 has a second clamping member 411. The second clamping member 411 includes a second clamping bump 252 disposed on an outer surface thereof to relate to the second recess 242 of the upper casing 3.

Referring to Figs. 1 and 2, the tablet PC includes a first secure member 211. The first secure member 211, the first through hole 212 and the first mounting member 213 combine into the first connection structure 21. The first secure member 211 penetrates through the first through hole 212 of the frame 1 to connect the first mounting member 213 of the upper casing 3. The first secure member 211 is a screw; the first mounting member 213 is a screw base.

Referring to Figs. 1 and 2, the tablet PC includes a second secure member 221. The second secure member 221, the second through hole 222 and the second mounting member 223 combine into the second connection structure 22. The second secure member 221 is a screw; the second mounting member 223 is a screw base.

With respect to Figs. 1 and 2, the tablet PC includes a third secure member 231. The third secure member 231, the third through hole 232 and the third mounting member 233 combine into the third connection structure 23. The third secure member 231 is a screw; the third mounting member 233 is a screw base.

Referring to Fig. 3, the first recess 241 of the upper casing 3 and the first clamping bump 251 of the lower casing 4 combine into the first clamping mechanism 24. The second recess 242 of the upper casing 3 and the second clamping bump 252 of the lower casing 4 combine into the second clamping mechanism 25.

Steps of assembling the housing 2 of tablet PC are described as follows. Frame 1 is assembled onto the upper portion 30 and the first exterior perimeter wall 31 of the upper casing 3. The first secure member 211 penetrates through the first through hole 212 of the frame 1 to the first mounting member 213 of the upper casing 3. The second secure member 221 penetrates through the through hole 222 of the upper casing 3 to the second mounting member 223 of the frame 1. Thus, the upper casing 3 firmly connects the top 15 of the frame 1. Subsequently, the frame 1 is assembled onto the lower portion 40 and the second exterior perimeter wall 41 of the lower casing 4. The first clamping bump 251 of the lower casing 4 is engaged with the first recess 241 of the upper casing 3. The second clamping bump 252 of the lower casing 4 is engaged with the second recess 242 of the upper casing 3. Thus, the lower casing 4 firmly connects to the bottom 16 of the frame 1. Finally, the battery 18 is installed in the bottom edge 14 of the frame 1, and a cover 19 encloses the upper casing 3 and the lower casing 4 over the battery 18.

Steps for changing the housing 2 of tablet PC are described as follows. The cover 19 and the battery 18 are removed. The third secure member 231 is taken apart to remove the lower casing 4. The first secure member 211 and the second secure member 221 are dismantled to remove the upper casing 3. The housing 2 is removed easily without changing or moving the electronic devices and the circuit board, all of which are disposed in the frame 1. The housing 2 can be replaced any time as needed.

The present invention is characterized by:
1. The housing is assembled outside the frame, thus moving or changing of the housing will not affect the electronic devices and the circuit board. The same type of frame can be used with various housing, and the tablet PC thus enjoys great diversity in appearance.
2. The housing is easy to remove in the manufacturing process. Stocks of the housing are therefore unnecessary, and the manufacturer can decrease the cost thereby.

It should be apparent to those skilled in the art that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A tablet PC with a interchangeable housing, comprising:
a frame including a screen arranged thereon; and
a housing disposed outside the frame and including an opening relating to
the screen.

2. The tablet PC as claimed in claim 1, wherein the housing includes an upper casing assembled on a top of the frame and a lower casing arranged on a bottom of the frame, and the opening is formed in the upper casing.

3. The tablet PC as claimed in claim 2, further including a first connection structure arranged on the frame and the upper casing, the first connection structure mounting the upper casing onto the top of the frame.

4. The tablet PC as claimed in claim 3, further including a first secure member, wherein the frame includes a first through hole, the upper casing includes a first mounting member disposed on an inner surface thereof, the first secure member, the first through hole and the first mounting member are combined into the first connection structure, and the first secure member penetrates through the first through hole of the frame to connect the first mounting member of the upper casing.

5. The tablet PC as claimed in claim 2, further including a second connection structure arranged on the frame and the upper casing, the second connection structure mounting the upper casing onto the top of the frame.

6. The tablet PC as claimed in claim 5, further including a second secure member, wherein the upper casing includes a second through hole, the frame includes a second mounting member disposed thereon, the second secure member, the second through hole and the second mounting member are combined into the second connection structure, and the second secure member penetrates through the second through hole of the upper casing to connect the second mounting member of the frame.

7. The tablet PC as claimed in claim 2, further including a third connection structure arranged on the frame and the lower casing, the third connection structure mounting the lower casing onto the bottom of the frame.

8. The tablet PC as claimed in claim 7, further including a third secure member, wherein the lower casing includes an inner tab disposed on an inner surface thereof, the inner tab has a third through hole formed thereon, the frame includes a third mounting member disposed thereon, the third secure member, the third through hole and the third mounting member are combined into the third connection structure, and the third secure member penetrates through the third through hole of the lower casing to connect the third mounting member of the frame.

9. The tablet PC as claimed in claim 2, wherein the housing includes a first clamping mechanism arranged onto the upper casing and the lower casing, and a cavity formed therebetween for receiving the frame; and the upper casing includes a first exterior perimeter wall including a first clamping member and a first recess formed on an outer surface of the first clamping member, the lower casing includes a second exterior perimeter wall including a first clamping bump engaging with the first recess, and the first recess and the first clamping bump are combined into the first clamping mechanism.

10. The tablet PC as claimed in claim 2, the housing includes a second clamping mechanism arranged on the upper casing and the lower casing, and a cavity is formed therebetween for receiving the frame; and the upper casing includes a first exterior perimeter wall including a second recess formed in an inner surface thereof, the lower casing includes a second exterior perimeter wall including a second clamping bump engaging with the second recess, and the second recess and the second clamping bump are combined into the second clamping mechanism.
